# EUROPÄISCHE PATENTSCHRIFT

(11) **EP 0 878 359 B1**
(45) Veröffentlichungstag und Bekanntmachung des Hinweises auf die Patenterteilung: **23.07.2003**
(21) Anmeldenummer: 98106950.3
(22) Anmeldetag: 16.04.1998
(51) Int. Cl.: B60R 21/16

(54) **Seitenaufprallschutzeinrichtung für einen Insassen eines Fahrzeuges**
Side collision protection device for a vehicle passenger
Dispositif de protection contre le choc latéral pour occupant de véhicule

(30) Priorität: 16.05.1997 DE 19720586
(43) Veröffentlichungstag der Anmeldung: 18.11.1998
(73) Patentinhaber: Dr.Ing.h.c. F. Porsche Aktiengesellschaft, 70435 Stuttgart (DE)
(72) Erfinder: Heinz, Martin, 70182 Stuttgart (DE); Trick, Fred, 71277 Rutesheim (DE)

(56) Entgegenhaltungen:
- DE-A- 4 443 027
- DE-C- 4 430 412
- PATENT ABSTRACTS OF JAPAN vol. 018, no. 602 (M-1705), 16.November 1994 -& JP 06 227348 A (TOYOTA MOTOR CORP), 16.August 1994,

## Beschreibung

Die Erfindung betrifft eine Seitenaufprallschutzeinrichtung für einen Insassen eines Fahrzeuges mit einem durch eine Trennwand in zwei übereinanderliegende Kammern unterteilten Gassack, wobei die untere Kammer mit einem Gasgenerator zusammenwirkt und an der im aufgeblasenen Zustand zumindest abschnittsweise etwa waagrecht ausgerichteten Trennwand des Gassacks an einem dem Gasgenerator abgewandten Ende eine längliche Durchtrittsöffnung ausgebildet ist.

Aus der gattungsgemäßen DE 44 43 027 A1 geht ein Gassack für eine Seitenaufprallschutzeinrichtung hervor, wobei eine im Innern des Gassackes angeordnete, etwa horizontale Trennwand den Gassack in zwei übereinanderliegende Kammern unterteilt. An der unteren Kammer ist örtlich eine Einlaßöffnung für den Gasstrom eines Gasgenerators vorgesehen. An der Trennwand ist entfernt von der Einlaßöffnung eine etwa rechteckförmige Durchströmöffnung vorgesehen, durch die der Gasstrom nach dem Aufblasen der ersten Kammer in die darüberliegende zweite Kammer hindurchströmen kann. Die waagrechte Trennwand ist umfangseitig durchgehend mit dem Gassack verbunden, so daß der Gasstrom nur durch eine einzige Durchströmöffnung in die zweite Kammer gelangen kann. Bei einer derartigen Anordnung kann es unter ungünstigen Bedingungen vorkommen, daß die einzige Durchströmöffnung während des Aufblasens des Gassackes durch Kontakt mit dem Insassen zumindest teilweise oder fast vollständig verschlossen wird, wodurch die untere Kammer dann überbelastet wird. Dies kann zu einem Nahtriß oder Geweberiß in der unteren Kammer des Gassacks führen. Die obere Kammer hingegen wird nicht oder nur teilweise mit Gas gefüllt, wodurch die einwandfreie Funktion des Gassacks in Frage gestellt ist, vor allem dann, wenn das Volumen der oberen Kammer etwa gleich groß oder größer ist als das Volumen der unteren Kammer.

Aufgabe der Erfindung ist es, an einer Trennwand eines aus zwei angrenzenden Kammern bestehenden Gassackes solche Vorkehrungen zu treffen, daß stets eine einwandfreie Funktion beider Kammern des Gassackes während des Aufblasens des Gassackes gegeben ist.

Erfindungsgemäß wird diese Aufgabe durch die Merkmale des Anspruchs 1 gelöst. Weitere, die Erfindung in vorteilhafter Weise ausgestaltende Merkmale beinhaltet der Unteranspruch.

Die mit der Erfindung hauptsächlich erzielten Vorteile sind darin zu sehen, daß durch die Anordnung von weitere Öffnungen mit einem relativ kleinen Querschnitt an der Trennwand quasi ein Überdruckventil bei einer Überlastung der ersten Kammer geschaffen wird, wodurch sowohl die Umfangsnähte des Gassackes als auch die Verbindungsnähte von Trennwand und Gassack und das Gewebe des Gassackes entlastet werden.

Im Ausführungsbeispiel ist etwa oberhalb des Gasgenerators am unteren Rand der zusammengefalteten Trennwand die als Überdruckventil wirkende weitere Öffnung vorgesehen. Darüber hinaus endet das der großflächigen Durchtrittsöffnung abgekehrte Ende der Trennwand bereits kurz vor der Umfangsnaht des Gassackes, so daß hier eine zusätzlich Öffnung zwischen den beiden übereinanderliegenden Kammern gebildet wird, welche ebenfalls als Überdruckventil fungiert. Durch die gerundete Ausbildung des vorderen und hinteren Endes der großflächigen Durchtrittsöffnung wird beim Aufblasen des Gassackes das Gewebe der Trennwand und die Verbindungsnaht von den beiden Gewebelagen des Gassacks geschont und es treten in diesem Bereich keine Risse auf.

Das benachbart der Durchtrittsöffnung verlaufende Ende der Trennwand ist bogenförmig nach unten gezogen, wodurch die Richtung des in die zweite Kammer einströmenden Gasstromes beim Aufblasen derart beeinflußt wird, daß sich der Gassack verbessert auch nach hinten oben bewegt.

Ein Ausführungsbeispiel der Erfindung ist in der Zeichnung dargestellt und wird im folgenden näher erläutert.

Es zeigt
- Fig. 1: eine Seitenansicht auf einen Gassack einer Seitenaufprallschutzeinrichtung, der mittels einer innenliegenden Trennwand in zwei übereinanderliegende Kammern unterteilt ist,
- Fig. 2: einen Schnitt nach der Linie II-II der Fig. 1 in größerer Darstellung,
- Fig. 3: einen Schnitt nach der Linie III-III der Fig. 1 in größerer Darstellung und
- Fig. 4: einen Schnitt nach der Linie IV-IV der Fig. 1 in größerer Darstellung.

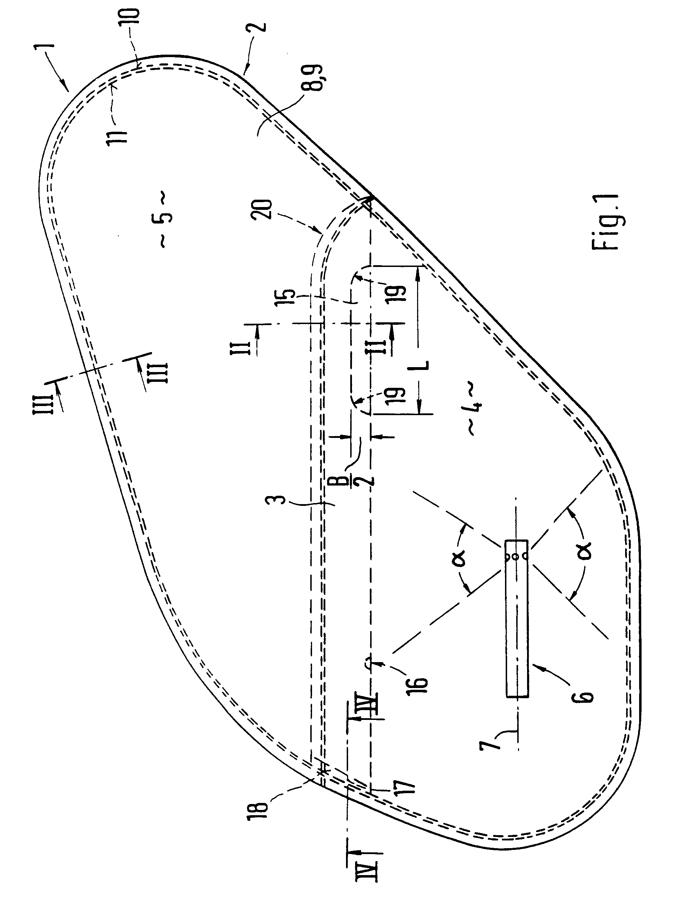

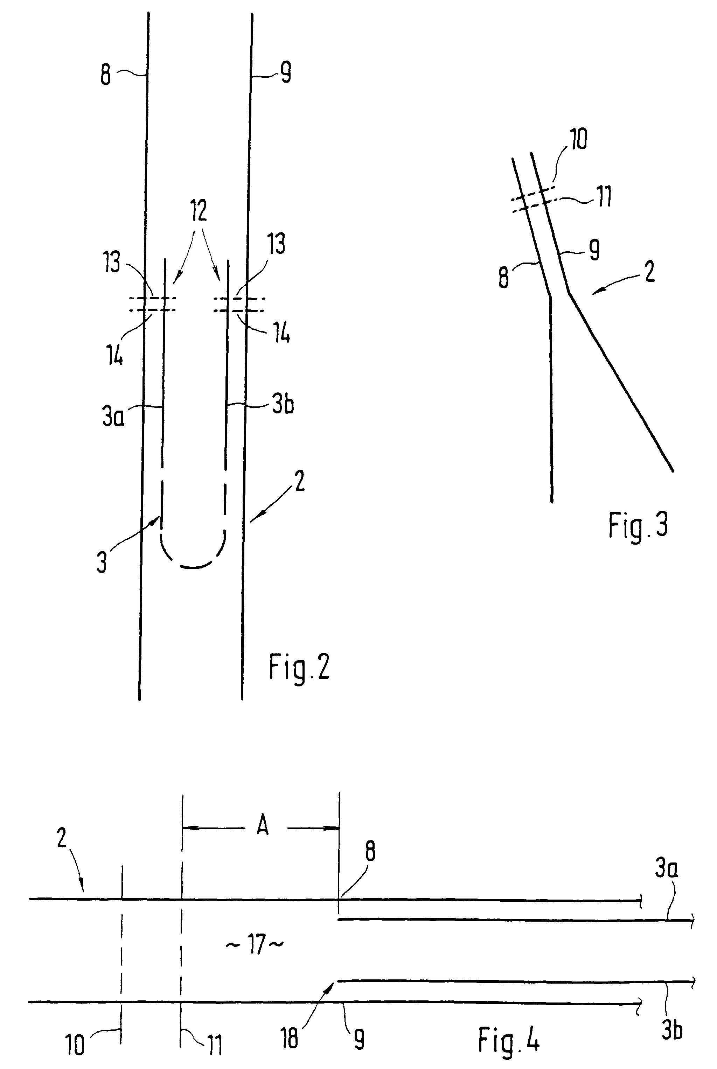

Eine Seitenaufprallschutzeinrichtung 1 für einen Insassen eines Fahrzeuges umfaßt einen Gassack 2, der mittels einer innenliegenden Trennwand 3 in zwei übereinanderliegende Kammern 4, 5 unterteilt ist. Die untere, dem Brust-/Beckenbereich des Insassen zugekehrte Kammer 4 wirkt mit einem Gasgenerator 6 zusammen, der im Ausführungsbeispiel innerhalb der unteren Kammer 4 angeordnet ist und durch einen langgestreckten Rohrgenerator gebildet wird. Die etwa horizontale Mittelachse des Rohrgenerators ist in Fig. 1 mit den Bezugszeichen 7 bezeichnet. Der Gassack 2 wird durch zwei etwa gleich große übereinanderliegende Gewebelagen 8, 9 gebildet, die randseitig durch zwei mit geringem Abstand zueinander angeordnete Umfangsnähte 10, 11 miteinander verbunden sind. Die Trennwand 3 ist gemäß Fig. 2 etwa hälftig zusammengefaltet, wobei die oberen Enden 12 der beiden Trennwandhälften 3a, 3b mit der jeweils zugeordneten Gewebelage 8, 9 des Gassackes 2 über Verbindungsnähte 13, 14 fest verbunden sind.

Erfindungsgemäß ist an der Trennwand 3 neben der außerhalb des kegelförmigen Abstrahlbereichs α des Gasgenerators 6 liegenden, einen relativ größeren Querschnitt aufweisenden Durchtrittsöffnung 15 weitere Öffnungen 16, 17 mit einem relativ kleinen Querschnitt vorgesehen, die mit Abstand zur Durchtrittsöffnung 15 verläuft und quasi als Überdruckventil beim Aufblasen der ersten Kammer 4 des Gassacks 2 wirkt. Die Öffnung 16 ist oberhalb des Gasgenerators 6 am unteren Rand der zusammengefalteten Trennwandhälften 3a, 3b ausgebildet und im Ausführungsbeispiel etwa kreisrund ausgebildet. Der Durchmesser der Öffnung 16 beträgt etwa 10 ± 5 mm. Die Trennwand 3 endet an dem der Durchtrittsöffnung 15 abgekehrten Ende bereits vor den Umfangsnähten 10, 11 des Gassacks 2 (Maß A), so daß zwischen der aufrechten seitlichen Begrenzung 18 der Trennwand 3 und der beabstandeten Umfangsnaht 11 die Öffnung 17 gebildet wird, welche ebenfalls als Überdruckventil für die erste Kammer 4 wirkt. Die außerhalb des Abstrahlbereichs α des Gasgenerators 6 liegende längliche Durchtrittsöffnung 15 weist einen ovalen Querschnitt mit gerundeten Endbereichen 19 auf. Die Länge L der Durchtrittsöffnung soll vorzugsweise relativ groß und die Breite B relativ gering sein, um eine gute Funktion beim Aufblasen des Gassackes 2 zu gewährleisten.

Das benachbart der Durchtrittsöffnung 15 verlaufende Ende 20 der Trennwand 3 sowie die Verbindungsnähte 13, 14 sind endseitig bogenförmig nach unten gezogen, wobei die Verbindungsnähte 13, 14 über die Umfangsnähte 10, 11 hinausgehen. Durch die bogenförmige Ausgestaltung der Trennwand 3 am hinteren Ende 20 wird die Gasströmung tangential nach oben und hinten geleitet, so daß die zweite Kammer 5 verbessert nach hinten oben bewegt wird. In der aufgeblasenen Lage des Gassackes 2 werden die beiden Hälften 3a, 3b der Trennwand 3 gestreckt und die Trennwand 3 verläuft mit Ausnahme des hinteren Endes 20 annähernd horizontal.

Die weitere Öffnung 16 mit einem relativ kleinen Querschnitt kann gemäß einer weiteren Variante durch Schwächung der Trennwand 3 eine große Öffnung bei hoher Belastung des Gassackes 2 freigeben (nicht näher dargestellt).

## Patentansprüche

1. Seitenairbagmodul für den Insassen eines Fahrzeugs, wobei innerhalb des Gassackes (2) eine Trennwand (3) mit einer Hauptdurchströmöffnung (15) ausgebildet ist, die annähernd parallel zur Unterkante des Gassackes (2) verläuft, und wobei zwischen Unterkante und Trennwand (3) ein Gasgenerator (6) angeordnet ist, dessen Abstrahlrichtung von der Hauptdurchströmöffnung (15) abgewandt ist und wobei die Hauptdurchströmöffnung (15) nahe der Umfangsnaht (10, 11) des Gassackes (2) angeordnet ist, **dadurch gekennzeichnet, daß** in der Trennwand (3) weitere Durchströmöffnungen (16, 17) kleineren Querschnittes als die Hauptdurchströmöffnung (15) vorgesehen sind, und wobei die Durchströmöffnung (17) an die Umfangsnaht (10, 11) angrenzt, und die Durchströmöffnung (16) hierzu benachbart liegt, und der Abstrahlbereich des Gasgenerators einen Winkel (α) beschreibt, der in etwa zwischen der Hauptströmöffnung (15) und der weiteren Durchströmöffnung (16) liegt.

2. Seitenairbagmodul nach Anspruch 1, **dadurch gekennzeichnet, daß** die Hauptdurchströmöffnung (15) einen rechteckigen Querschnitt aufweist, wobei die Ecken verrundet sind.

## Claims

1. A side airbag module for the occupant of a vehicle, wherein a partition (3) with a main flow opening (15) is formed inside the airbag (2) and extends substantially parallel to the bottom edge of the airbag (2), and wherein a gas generator (6) is arranged between the bottom edge and the partition (3), the emission direction of the gas generator (6) being averted from the main flow opening (15), and wherein the main flow opening (15) is arranged close to the circumferential seam (10, 11) of the airbag (2), **characterised in that** further flow openings (16, 17) of smaller cross-section than the main flow opening (15) are provided in the partition (3), the flow opening (17) bordering on the circumferential seam (10, 11) and the flow opening (16) lying adjacent thereto, and the emission range of the gas generator describing an angle (α) lying approximately between the main flow opening (15) and the further flow opening (16).

2. A side airbag module according to claim 1, **characterised in that** the main flow opening (15) has a rectangular cross-section, the corners of which are rounded.

## Revendications

1. Module de coussin gonflable latéral pour l'occupant d'un véhicule, une paroi de séparation (3), présentant à l'intérieur du coussin à gaz (2) une ouverture d'écoulement principale (15), étant formée, qui s'étend sensiblement parallèlement au bord inférieur du coussin à gaz (2), et un générateur de gaz étant disposé entre le bord inférieur et la paroi de séparation (3), dont le sens de diffusion est à l'opposé de l'ouverture d'écoulement principale (15), et l'ouverture d'écoulement principale (15) étant disposée à proximité de la couture circonférentielle (10, 11) du coussin à gaz (2), **caractérisé en ce que** dans la paroi de séparation (3) d'autres ouvertures d'écoulement (16, 17) d'une section transversale plus petite que celle de l'ouverture d'écoulement principale (15) sont prévues, et l'ouverture d'écoulement (17) étant adjacente à la couture circonférentielle (10, 11), et l'ouverture d'écoulement (16) étant voisine de celle-ci, et la zone de diffusion du générateur de gaz décrivant un angle (α) qui se situe à peu près entre l'ouverture d'écoulement principale (15) et l'autre ouverture d'écoulement (16).

2. Module d'airbag latéral selon la revendication 1, **caractérisé en ce que** l'ouverture d'écoulement principale (15) présente une section transversale rectangulaire, les angles étant arrondis.
